(19) Europäisches Patentamt
European Patent Office
Office européen des brevets

(11) **EP 4 651 083 A1**

(12) **EUROPEAN PATENT APPLICATION**
published in accordance with Art. 153(4) EPC

(43) Date of publication:
**19.11.2025 Bulletin 2025/47**

(21) Application number: **23916160.7**

(22) Date of filing: **21.11.2023**

(51) International Patent Classification (IPC):
*G06T 7/55* (2017.01)          *G06T 7/00* (2017.01)
*G06T 7/254* (2017.01)          *G06T 7/70* (2017.01)
*H04N 7/18* (2006.01)          *H04N 23/60* (2023.01)
*H04N 23/90* (2023.01)

(52) Cooperative Patent Classification (CPC):
**G06T 7/00; G06T 7/254; G06T 7/55; G06T 7/70;**
**H04N 7/18; H04N 23/60; H04N 23/90**

(86) International application number:
**PCT/JP2023/041790**

(87) International publication number:
**WO 2024/150543 (18.07.2024 Gazette 2024/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **13.01.2023 JP 2023003960**

(71) Applicant: **Astemo, Ltd.**
**Chiyoda-ku,**
**Tokyo 1000004 (JP)**

(72) Inventors:
• **MATONO, Haruki**
  **Tokyo 100-8280 (JP)**
• **IRIE, Kota**
  **Hitachinaka-shi, Ibaraki 312-8503 (JP)**
• **KIDO, Hideaki**
  **Tokyo 100-8280 (JP)**

(74) Representative: **MERH-IP Matias Erny Reichl**
**Hoffmann**
**Patentanwälte PartG mbB**
**Paul-Heyse-Straße 29**
**80336 München (DE)**

(54) **ON-VEHICLE CAMERA SYSTEM AND IMAGE PROCESSING METHOD**

(57)     An image processing system includes: an image acquisition unit that acquires a plurality of images captured by a plurality of cameras arranged so that there is an overlapping imaging region where imaging regions at least partially overlap; a representative distance calculation unit that calculates a posture change of each camera on a basis of a change in a posture of a host vehicle; a movement amount computation unit that finds an amount of change in a position of a feature point in the overlapping imaging region of the plurality of images captured by the plurality of cameras; and a three-dimensional information acquisition unit that reduces the images on a basis of the amount of change in the position of the feature point and uses the reduced images to acquire three-dimensional information of the overlapping imaging region.

[FIG. 1]

## Description

Incorporation by Reference

This application claims priority to Japanese Patent Application No. 2023-3960 filed on January 13, 2023, the contents of which are incorporated herein by reference.

Technical Field

The present invention relates to an on-vehicle camera system and an image processing method for recognizing an outside environment of a host vehicle using a plurality of cameras.

Background Art

Vehicle control technologies such as adaptive cruise control (ACC), an advanced emergency braking system (AEBS), and a lane keeping assist system (LKAS) are known as technical elements of a driving assistance system and an automated driving system. There is known a technology of constantly recognizing and tracking a target (for example, another vehicle, a pedestrian, a cyclist, a traffic light, a traffic sign, a white line, an obstacle, or the like) around a host vehicle on the basis of an image captured by an on-vehicle camera, thereby performing following traveling for a preceding vehicle, operating an emergency brake, or performing steering control so as not to go out of a traveling lane in order to implement the vehicle control technologies. In addition, a vehicle in which a plurality of cameras are arranged to monitor not only an area in front of the host vehicle and an area behind the host vehicle but also areas on sides of the host vehicle, and automatic parking is enabled using images captured by the plurality of cameras has become widespread.

In order to improve accuracy of vehicle control, it is necessary for the camera to capture a clear image, and thus, it is necessary to adjust an imaging parameter. That is, an image captured from the traveling vehicle is blurred due to a distance by which the object has moved during an exposure time, and the blurred image is captured.

PTL 1 (JP 2008-174078 A) is known as a related art for controlling the exposure time of the on-vehicle camera. In the abstract of PTL 1, a description "an image of surroundings of a vehicle is captured and displayed in consideration of a traveling state of the vehicle" is described as a problem, and a description "an on-vehicle camera control device includes vehicle speed acquisition means for acquiring a vehicle speed of the vehicle on which an on-vehicle camera is mounted, and camera control means for changing an exposure time of the on-vehicle camera according to the vehicle speed acquired by the vehicle speed acquisition means" is described as a solution. Further, Paragraph 0036 of PTL 1 describes "when the vehicle is moving at a high speed, the image of the surroundings of the vehicle can be displayed in real time although the image is not clear".

Summary of Invention

Technical Problem

When the blurred image as described above is used, it is necessary to widen a matching window used in stereo matching processing, and there is a problem that a calculation cost increases and a parallax distance measurement accuracy decreases.

Further, the exposure time control of PTL 1 uniformly changes the exposure time of the on-vehicle camera according to the vehicle speed in order to display the image of the surroundings of the host vehicle in real time, but such exposure time control has a problem that a clear image cannot be acquired at the time of high-speed movement. Therefore, when using an image captured by the technology described in PTL 1, a target around the host vehicle cannot be accurately recognized, and there is a possibility that appropriate vehicle control cannot be performed by the ACC, the AEBS, the LKAS, or the like.

Therefore, an object of the present invention is to provide an on-vehicle camera system and an image processing method capable of reducing an influence of blurring and acquiring accurate three-dimensional information and target recognition information required for vehicle control such as adaptive cruise control (ACC), an advanced emergency braking system (AEBS), or a lane keeping assist system (LKAS) without being affected by a vehicle speed.

Solution to Problem

A representative example of the invention disclosed in the present application is as follows. That is, there is provided an image processing system including: an image acquisition unit that acquires a plurality of images captured by a plurality of cameras arranged so that there is an overlapping imaging region where imaging regions at least partially overlap; a representative distance calculation unit that calculates a posture change of each camera on the basis of a change in a posture of a host vehicle; a movement amount computation unit that finds an amount of change in a position of a feature point in the overlapping imaging region of the plurality of images captured by the plurality of cameras; and a three-dimensional information acquisition unit that reduces the images on the basis of the amount of change in the position of the feature point and uses the reduced images to acquire three-dimensional information of the overlapping imaging region.

Advantageous Effects of Invention

According to one aspect of the present invention, it is possible to reduce an influence of blurring due to movement of a vehicle during an exposure time. Problems, configurations, and effects other than those described above will become apparent by the following description of embodiments.

Brief Description of Drawings

[Fig. 1] FIG. 1 is a functional block diagram of an on-vehicle camera system according to an embodiment of the present invention.
[Fig. 2] FIG. 2 is a diagram illustrating a relationship between a visual field region and a stereo-vision region of a camera according to the embodiment of the present invention.
[Fig. 3] FIG. 3 is a flowchart of processing performed by the on-vehicle camera system according to the embodiment of the present invention.
[Fig. 4] FIG. 4 is a diagram illustrating a vanishing point in an image captured by a camera group according to the embodiment of the present invention.

Description of Embodiments

Hereinafter, an on-vehicle camera system 100 according to an embodiment of the present invention will be described with reference to the drawings.

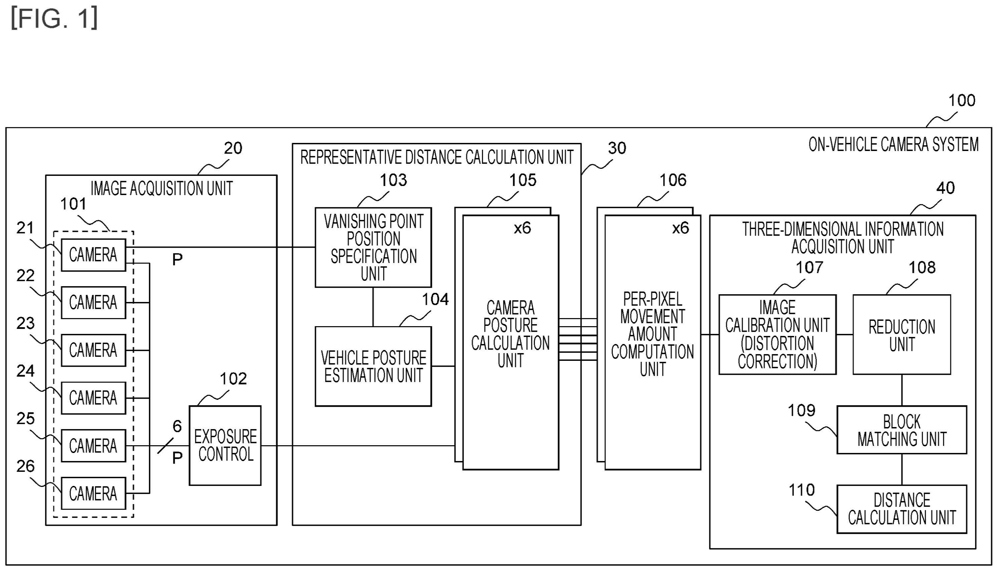

FIG. 1 is a functional block diagram of the on-vehicle camera system 100. The on-vehicle camera system 100 is mounted on a host vehicle 1 and includes an image acquisition unit 20, a representative distance calculation unit 30, a per-pixel movement amount computation unit 106, and a three-dimensional information acquisition unit 40. This will be described in order below.

<Image Acquisition Unit 20>

The image acquisition unit 20 includes a camera group 101 and an exposure control unit 102.

The camera group 101 is a sensor that images surroundings of the host vehicle and outputs imaging data P, and a plurality of cameras 21 to 26 are installed in the host vehicle 1 of the present embodiment so as to be able to image the entire surroundings of the vehicle. Each camera of the camera group 101 is installed so that at least a part of an imaging range overlaps with an imaging range of another camera.

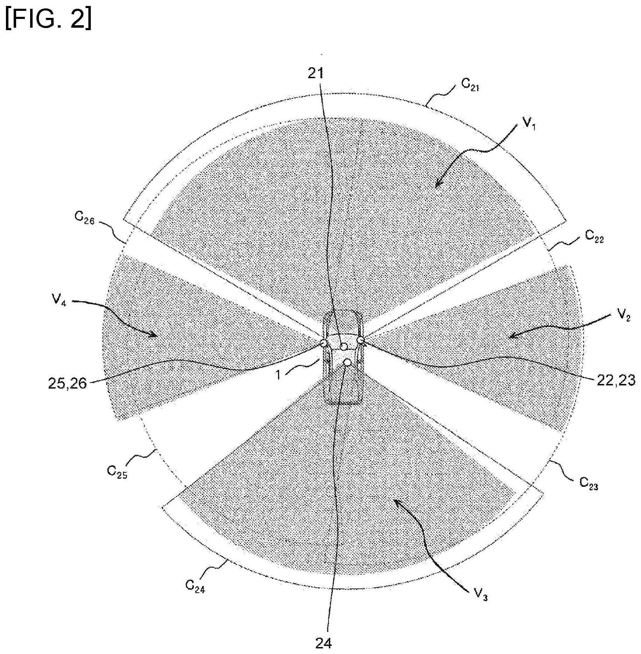

FIG. 2 is a diagram illustrating a relationship between a visual field region C of each camera of the camera group 101 and a stereo-vision region V in a top view of the host vehicle 1.

In the camera group 101 of the present embodiment, a front camera 21 that images a front visual field region C21 indicated by a solid line, a front-right side camera 22 that images a front-right side visual field region C22 indicated by a one-dot chain line, a rear-right side camera 23 that images a rear-right side visual field region C23 indicated by a broken line, a rear camera 24 that images a rear visual field region C24 indicated by a solid line, a rear-left side camera 25 that images a rear-left side visual field region C25 indicated by a one-dot chain line, and a front-left side camera 26 that images a front-left side visual field region C26 indicated by a broken line are installed. The camera group 101 includes these six cameras and can capture the entire surroundings of the vehicle.

In a region where the plurality of visual field regions C overlap, the same object can be imaged in a plurality of line-of-sight directions (stereo imaging), and three-dimensional information of the imaged object (a moving body, a still object, a road surface, or the like, around the host vehicle) can be acquired by using a known stereo matching technology. Therefore, a region where the visual field regions C overlap is referred to as the stereo-vision region V.

FIG. 2 illustrates front, rear, left, and right stereo-vision regions V1 to V4, but the number and direction of the stereo-vision regions V are not limited to those in this example. In addition, FIG. 2 illustrates the visual field region C of each camera in a simplified manner, and an actual imageable distance of each camera does not need to have the illustrated magnitude relationship. As an example, the actual imageable distance of each camera is about 200 m for the front camera 21 and the rear camera 24, and is about 50 m for the other cameras. In this case, an imageable distance of the stereo-vision region V is about 50 m.

The exposure control unit 102 adjusts a brightness of the camera group 101. In order to accurately measure a distance in the stereo matching technology described below, it is necessary to adjust the brightness so as to be the same between the cameras. The exposure control unit 102 calculates an average luminance value from the images P from the respective cameras, determines an exposure time of a complementary metal-oxide-semiconductor (CMOS) sensor so as to fall within an intermediate gradation using the calculated average luminance value, and controls the exposure time of the CMOS sensor. In a case where the brightness is different between the cameras, exposure adjustment of the camera that captures a traveling path of the host vehicle 1 may be prioritized, and the brightness of the camera may be adjusted to an intermediate value. As a result, it is possible to prioritize discovery of an obstacle with which the host vehicle 1 may collide.

As a camera exposure method, there are a system in which the exposure time of each camera is completed in a camera module and a system in which the exposure time can be set from the outside. The system in which the exposure time is completed in the camera module has an advantage that independence of components is increased, and it becomes easy to use the camera for various purposes and change the camera to another type of camera. However, it is difficult to perform fine control to adjust exposure to optimum exposure in consideration of stereo matching. For example, when the exposure time is lengthened, the captured image is blurred, and it becomes difficult to calculate a correct distance by the stereo matching processing.

A well-known stereo matching technology will be described. In the stereo matching technology, the cameras are arranged at a plurality of positions, the same target object is imaged from a plurality of different viewpoints, and a difference in appearance in the obtained image, that is, a distance to the target object is calculated based on parallax. In a general stereo camera system using two cameras, such conversion is expressed by the following Formula 1.

[Math. 1]

$$Z = \frac{f}{w}\frac{B}{D}$$

In Formula 1, Z [mm] represents the distance to the target object, f [mm] represents a focal length, w [mm/px] represents a pixel pitch, B [mm] represents a distance between the cameras (base length), and D [px] represents the parallax.

In calculating the parallax, the images captured from the plurality of positions are arranged horizontally, and a position where a point corresponding to a specific point in the left image is captured in the right image is searched. In order to efficiently perform the search, parallelization processing is generally performed in advance. The parallelization is alignment of the images in a vertical direction, and is processing of calibrating the images so that the same points in the left and right images are imaged at the same height. In the parallelized images, when searching the corresponding point, only a certain horizontal line needs to be searched, and processing efficiency is high.

Left and right matching positions in the parallelized left and right images can be searched for each block to calculate a distance for each pixel. The obstacle can be detected by estimating a plane from the distance data, removing a point cloud on the plane, and grouping the remaining point cloud having a short distance. In addition, a small obstacle such as a falling object can be detected by assuming that a road on the traveling path is a gentle plane and using a position that is a step on the plane.

Here, it is necessary that the left and right images are captured in the same manner as a precondition when searching for the left and right matching positions. In addition, it is assumed that a search block has a sufficiently unique pattern. In a case where a clipped block does not have a unique pattern, many similar locations are found even when searching the image, and the same place cannot be correctly specified from the left and right images. During traveling of an automobile, a video moves so as to flow in a screen, and thus, light originally collected to one pixel of the CMOS sensor may be imaged across a plurality of pixels. This is determined by the exposure time, the distance from the camera to the target object, and a relative movement speed between the target object and the camera.

When a sufficiently unique pattern cannot be obtained in the search block, a size of the search block is increased, and the right and left images can be collated in a wider region to specify a correct location. However, when the size of the block is increased, a size of the image to be processed increases, and thus, a processing cost increases. Therefore, by providing a mechanism for reducing a size of a wide region in which a sufficiently unique pattern is included in the block to a size in which the unique pattern remains, it is possible to maintain accuracy in specifying a collation position while reducing a calculation cost.

<Representative Distance Calculation Unit 30>

The representative distance calculation unit 30 includes a vanishing point position specification unit 103, a vehicle posture estimation unit 104, and a camera posture calculation unit 105.

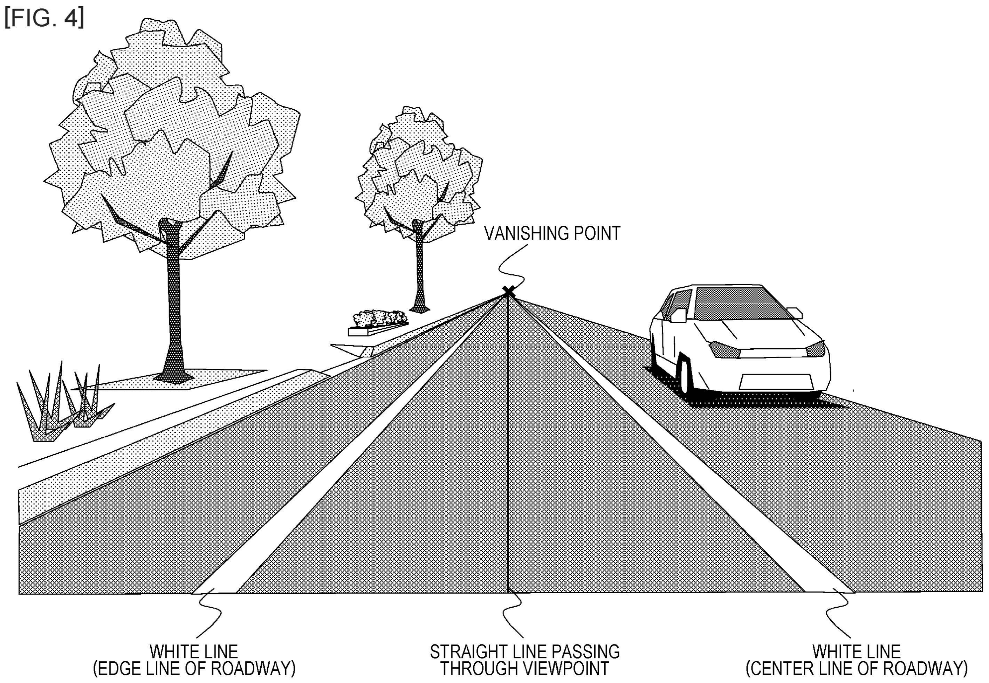

The vanishing point position specification unit 103 acquires the image from at least one camera of the camera group 101, holds the image P of one past frame, finds a movement vector of each pixel by a known optical flow technology for the image P of the current frame and the position of each pixel, finds an intersection (vanishing point) at which line segments of the movement vectors intersect, and outputs intersection coordinates. In the present embodiment, the vanishing point is used as a feature point of the image. As illustrated in FIG. 4, the vanishing point is an intersection of a straight line parallel to a straight line passing through a viewpoint in a perspective drawing method, and is detected on a horizontal line forming an end portion of a road surface candidate region obtained by extending a road surface.

The vehicle posture estimation unit 104 calculates the intersection coordinates output from the vanishing point position specification unit 103, an initial position of the vanishing point where the camera is attached to the host vehicle 1, and an amount of change from the initial position of the vanishing point. In a case where the focal length of a lens of the camera and a pixel size of the CMOS sensor are known, a change in an angle indicating an inclination of the host vehicle 1 with respect to the road surface is calculated from the amount of change in the position of the vanishing point.

The camera posture calculation unit 105 calculates a posture change of each camera from a change in an angular relationship between the host vehicle 1 and the road surface found from the image P captured by one camera of the camera group 101. For example, in a case where an axis of a traveling direction is shifted by one degree in the vertical direction in the relationship between the host vehicle and the road surface, the camera attached to the host vehicle 1 so that an optical axis is horizontal transitions to a state where the optical axis is shifted by one degree in the vertical direction.

<Per-Pixel Movement Amount Computation Unit 106>

The per-pixel movement amount computation unit 106 calculates a movement amount of each pixel in each image of an image pair subjected to stereo matching among the images captured by the respective cameras. The movement amount of each pixel may be calculated for all the pixels in the image, or may be calculated only for the feature point. For example, the per-pixel movement amount computation unit 106 may determine, as the road surface candidate region, a region below the position of the vanishing point on the image. Then, the per-pixel movement amount computation unit 106 calculates a change (movement amount) in the position of the feature point included in the determined road surface candidate region. As the feature point, for example, a point having a large difference in color or contrast from the surroundings, such as a corner of a white line displayed on the road surface, may be used.

<Three-Dimensional Information Acquisition Unit 40>

The three-dimensional information acquisition unit 40 is a functional block that calculates a distance for each pixel with respect to an overlapping region of the images, and includes an image calibration unit 107, a reduction unit 108, a block matching unit 109, and a distance calculation unit 110.

The image calibration unit 107 finds an internal parameter (for example, the exposure time) and an external parameter (for example, an attachment position of the camera) of the camera from a result of imaging a calibration chart in advance, and calibrates the image based on the internal parameter and the external parameter. For example, a pair of the images is parallelized.

The number of pixels on the CMOS sensor over which imaging is performed within the exposure time is found in the per-pixel movement amount computation unit 106, the reduction unit 108 determines and reduces a reduction magnification so that the number of pixels over which the imaging is performed is 1 pixel or less. In a case where the movement amount of each pixel has a large deviation in one image, two or more images with different reduction magnifications may be generated. When a plurality of reduced images having different magnifications are generated, a resolution can be maintained as much as possible, and thus, the resolution of the image can be maintained, and deterioration of the image can be suppressed. However, a large storage region of a memory is required to hold the image, and a calculation cost for performing the reduction processing a plurality of times is required.

The block matching unit 109 performs the matching processing in which the sum of absolute differences (SAD) is used as a cost function on the image pair after image calibration and reduction. In the present embodiment, the SAD is used as the cost function, but the matching processing using another cost function may also be used.

The distance calculation unit 110 calculates the distance by using Formula 1 described above.

For example, in a case where the on-vehicle camera system 100 is mounted on an on-vehicle electronic control device, the on-vehicle camera system 100 is implemented by a computer including a computation device, a storage device, and a communication interface. The computation device is a processor (for example, a microcomputer) that executes a program stored in the storage device. The computation device executes a predetermined program to operate as a functional unit that provides each function of the on-vehicle camera system 100. The storage device includes a nonvolatile storage region and a volatile storage region. The nonvolatile storage region includes a program region for storing the program to be executed by the computation device and a data region for temporarily storing data used when the computation device executes the program. The volatile storage region stores data used when the computation device executes the program. The communication interface is connected to another electronic control device via a network such as a controller area network (CAN) or Ethernet.

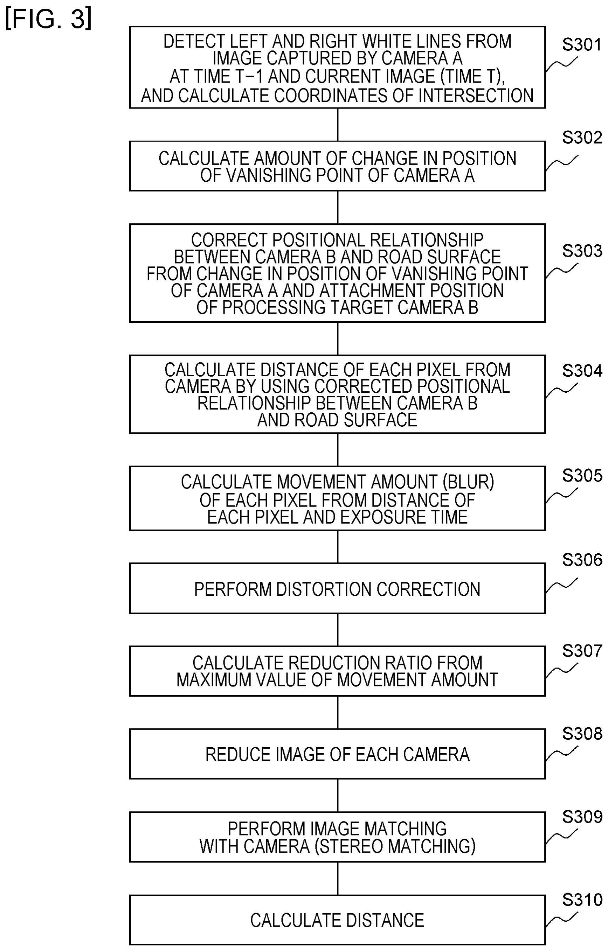

FIG. 3 is a flowchart of processing performed by the on-vehicle camera system 100.

The vanishing point position specification unit 103 acquires an image from at least one camera A of the camera group 101. For example, a target (for example, left and right white lines displayed on the road surface illustrated in FIG. 4) to be the feature point is detected from an image A' captured by the camera A at time (T-1) and the latest (time T) image A, and coordinates of the vanishing point which is the intersection thereof are calculated (S301).

Next, the vehicle posture estimation unit 104 calculates an amount of change between the position of the vanishing point in the image A' captured by the camera A at the time T-1 and the position of the vanishing point in the image A captured at the time T (S302).

Next, the camera posture calculation unit 105 calculates the amount of change in the position of the vanishing point of the camera A, information regarding an attachment position of a processing target camera B, and a correction amount of a positional relationship between the camera B and the road surface (S303). For example, the amount of change in the position of the vanishing point in a vehicle coordinate system is calculated from the amount of change in the position of the vanishing point of the camera A calculated in step S302 and information regarding an attachment position of the camera A (the attachment position and an optical axis direction). Then, an amount of change in the position of the vanishing point in a coordinate system of the camera B, that is, the correction amount of the positional relationship between the camera B and the road surface is calculated from the amount of change in the position of the vanishing point in the vehicle coordinate system and the information regarding the attachment position of the camera B (the attachment position and the optical axis direction).

Next, the per-pixel movement amount computation unit 106 calculates, by using the calculated correction amount of the positional relationship between the camera B and the road surface, a distance of each pixel from the camera in a case where it is assumed that the road surface is flat and there is no obstacle from the image captured by the camera B at time T-1 and the amount of change in the position of the feature point in the image captured at time T (S304).

Next, the per-pixel movement amount computation unit 106 calculates a relative movement speed of an actual position of the feature point from the distance of each pixel calculated in step S304 and the vehicle speed, and calculates the movement amount (blur amount) of each pixel on the image from the movement speed and the exposure time of the camera B (S305).

Next, the image calibration unit 107 calibrates the image on the basis of the internal parameter and the external parameter of the camera, and corrects distortion occurring in the image (S306).

Next, the reduction unit 108 calculates a reduction ratio of the movement amount of the feature point found for each of a plurality of images (S307). That is, the reduction unit 108 may determine the reduction ratio on the basis of at least one of the movement amounts of the feature points found for the plurality of images, and it is desirable that the reduction unit 108 may determine the reduction ratio by using the movement amount of the feature point in the image in which the movement amount of the feature point is large. The reduction unit 108 may calculate the reduction ratio from one maximum value for all the pixels, or may calculate the reduction ratio on the basis of the maximum value for each region of interest (ROI). In this case, the entire region of the recognized object, a plurality of divided regions (for example, a far region and a near region) obtained by dividing the image, and the like can be adopted as the region of interest. In the calculation of the reduction ratio, the movement amount in a lateral (horizontal) direction which is a main movement direction of the vehicle is used, but the reduction ratio may also be calculated using the movement amount in a longitudinal (vertical) direction. Furthermore, the calculated reduction ratio may be corrected by comparing the reduction ratio in an imaging region with the reduction ratio calculated from the movement amount of the image. That is, the minimum value of the reduction ratio may be determined, and in a case where the calculated reduction ratio is smaller than the minimum reduction ratio, the minimum reduction ratio may be adopted.

Next, the reduction unit 108 reduces the image captured by each camera of the camera group 101 by using the reduction ratio calculated in step S307 (S308).

Next, the block matching unit 109 matches the paired images including the overlapping region (S309).

Next, the distance calculation unit 110 calculates the distance by using a matching result in step S309 (S310).

The on-vehicle camera system 100 of the present embodiment does not have to be provided with the vanishing point position specification unit 103. In a case where the vanishing point position specification unit 103 is not provided, the movement amount of each pixel may be computed by the exposure time assuming that the surroundings of the host vehicle 1 is always a horizontal plane. Although a calculation cost for finding the vanishing point can be reduced, accuracy may deteriorate when the posture change of the host vehicle 1 is large.

In the above-described embodiment, the vanishing point position specification unit 103 finds the vanishing point by using the image acquired from one camera of the camera group 101, and the vanishing point position specification unit 103 may also find the vanishing point by using the images acquired from all the cameras of the camera group 101. In a configuration in which the camera group 101 and the representative distance calculation unit 30 are integrated with each other, since there is a margin in calculation resources, the vanishing point may be found using the image acquired from each camera of the camera group 101, and complexity of switching the processing for each camera can be eliminated.

Some or all of the above configurations may be implemented by hardware, or may be implemented by executing a program by a processor. In addition, the control lines and information lines indicate those that are considered necessary for explanation, and do not necessarily indicate all the control lines and information lines in the product. In practice, it can be considered that almost all configurations are interconnected.

As described above, according to the embodiment of the present invention, the image acquisition unit 20 that acquires the plurality of images captured by the plurality of cameras 21 to 26 arranged so that there is an overlapping imaging region where the imaging regions at least partially overlap, the representative distance calculation unit 30 that calculates the posture change of each camera on the basis of the change in the posture of the host vehicle 1, the per-pixel movement amount computation unit 106 that finds the amount of change in the position of the feature point in the overlapping imaging region of the plurality of images captured by the plurality of cameras, and the three-dimensional information acquisition unit 40 that reduces the images on the basis of the amount of change in the position of the feature point and uses the reduced images to acquire the three-dimensional information of the overlapping imaging region are included, and thus, it is possible to reduce an influence of blurring due to the movement of the vehicle during the exposure time. That is, by performing the matching processing after the reduction processing according to the calculated movement amount in the image, a matching window can be reduced, and a region where the image is blurred by the exposure time can be grasped. Therefore, it is possible to dynamically change the calculation cost in a state where the accuracy is maximally maintained in a situation where the blur occurs, to reduce a distance measurement cost due to the parallax, and to improve distance measurement accuracy. In addition, the calculation cost can be reduced according to the blur amount, and a plurality of applications can be executed by a low-cost microcomputer.

In addition, since the movement amount computation unit 106 finds the amount of change in the position of the feature point in the road surface candidate region where the road surface is imaged among the images captured by the plurality of cameras 21 to 26 on the basis of the change in the posture of the host vehicle 1, the road surface candidate region can be accurately found, and the accurate distance to the object can be calculated.

In addition, the representative distance calculation unit 30 includes the vehicle posture estimation unit 104 that estimates the posture of the host vehicle 1 by using the images captured by at least two cameras among the plurality of cameras 21 to 26, and the movement amount computation unit 106 determines the road surface candidate region by using an estimation result of the vehicle posture estimation unit 104 and finds the movement amount of the feature point included in the determined road surface candidate region, and thus, the movement amount of the feature point can be accurately found.

In addition, the representative distance calculation unit 30 includes the vanishing point position specification unit 103 that finds the position of the vanishing point in the image captured by at least one camera among the plurality of cameras, and the movement amount computation unit 106 finds the movement amount of the feature point in the images captured by the plurality of cameras 21 to 26 on the basis of a difference between the position of the vanishing point of the image captured at a certain timing and the position of the vanishing point of the image captured at the next timing. That is, a calculation amount can be reduced by using one camera. For example, as a result of estimating the vehicle posture from a result of measuring a three-dimensional space by a front monitoring camera is used, vehicle posture estimation processing can be non-redundantly performed in a system in which both the front monitoring camera and a peripheral monitoring camera are mounted, and thus, the calculation amount can be reduced.

In addition, as a case where the vanishing point position specification unit 103 is provided by the plurality of cameras, for example, it is possible to observe the movement of the vehicle in which a front side of the vehicle is shifted upward and a rear side of the vehicle is shifted downward due to pitching of the vehicle by specifying the position of the vanishing point in each of the images captured by the front camera and the rear camera. In this case, since a difference in detected value between the vanishing points of a captured image of the front side and a captured image of the rear side when the posture is not changed can be used as a detection error of the position of the vanishing point of such an imaging system, the vehicle posture estimation processing in consideration of the error can be performed, and the position of the vanishing point can be stably calculated.

Furthermore, the movement amount computation unit 106 finds the movement amount of the feature point for each of the plurality of images captured by the plurality of cameras 21 to 26, and the three-dimensional information acquisition unit 40 includes the image reduction unit 107 that determines the reduction ratios of the plurality of images on the basis of at least one of the movement amounts of the feature point found for each of the plurality of images. Therefore, the reduction ratio can be determined based on the feature amount of the region of interest, and the accurate distance to the object can be calculated.

Furthermore, since the image reduction unit 107 determines the reduction ratio on the basis of the movement amount of the feature point in the image in which the movement amount of the feature point is large among the plurality of images, and the reduction magnification is adjusted according to the larger movement amount of each pixel, it is possible to provide an optimum method capable of ensuring accuracy while reducing the calculation amount.

Note that the present invention is not limited to the above-described embodiments, but includes various modifications and equivalent configurations within the scope of the appended claims. For example, the above-described embodiments have been described in detail in order to explain the present invention in an easy-to-understand manner, and the present invention is not necessarily limited to those having all the configurations described. Further, a part of the configuration of one embodiment may be replaced with the configuration of another embodiment. In addition, the configuration of another embodiment may be added to the configuration of one embodiment. In addition, a part of the configuration of each embodiment may be added with another configuration, may be deleted, and may be replaced with another configuration.

Further, a part of, or the entirety of the respective configurations, functions, processing units, processing means, and the like described above may be implemented by hardware, for example, may be designed as an integrated circuit, or may be implemented by software for a processor interpreting and executing programs for implementing the respective functions.

Information such as a program, a table, and a file for implementing each function can be stored in a storage device such as a memory, a hard disk, or a solid state drive (SSD), or a recording medium such as an integrated circuit (IC) card, a secure digital (SD) card, or a digital versatile disc (DVD).

In addition, the control lines and information lines indicate those considered necessary for explanation, and do not necessarily indicate all the control lines and information lines necessary for implementation. In actual implementation, it may be considered that almost all configurations are interconnected.

**Claims**

1. An image processing system comprising:

   an image acquisition unit that acquires a plurality of images captured by a plurality of cameras arranged so that there is an overlapping imaging region where imaging regions at least partially overlap;
   a representative distance calculation unit that calculates a posture change of each camera on a basis of a change in a posture of a host vehicle;
   a movement amount computation unit that finds an amount of change in a position of a feature point in the overlapping imaging region of the plurality of images captured by the plurality of cameras; and
   a three-dimensional information acquisition unit that reduces the images on a basis of the amount of change in the position of the feature point and uses the reduced images to acquire three-dimensional information of the overlapping imaging region.

2. The image processing system according to claim 1, wherein
   the movement amount computation unit finds the amount of change in the position of the feature point in a road surface candidate region where a road surface is imaged among the images captured by the plurality of cameras on a basis of the change in the posture of the host vehicle.

3. The image processing system according to claim 2, wherein

   the representative distance calculation unit includes a vehicle posture estimation unit that estimates the posture of the host vehicle by using the images captured by at least two cameras among the plurality of cameras, and
   the movement amount computation unit determines the road surface candidate region by using an estimation result of the vehicle posture estimation unit and finds a movement amount of the feature point included in the determined road surface candidate region.

4. The image processing system according to claim 1, wherein

   the representative distance calculation unit includes a vanishing point position specification unit that finds a position of a vanishing point in the image captured by at least one camera among the plurality of cameras, and
   the movement amount computation unit finds a movement amount of the feature point in the images captured by the plurality of cameras on a basis of a difference between the position of the vanishing point of the image captured at a certain timing and the position of the vanishing point of the image captured at a next timing.

5. The image processing system according to claim 1, wherein

   the movement amount computation unit finds a movement amount of the feature point for each of the plurality of images captured by the plurality of cameras, and
   the three-dimensional information acquisition unit calculates a reduction ratio on a basis of at least one of the movement amounts of the feature point found for the plurality of images, and includes an image reduction unit that reduces the plurality of images by using the calculated reduction ratio.

6. The image processing system according to claim 5, wherein
   the image reduction unit calculates the reduction ratio on a basis of the movement amount of the feature point in an image in which the movement amount of the feature point is large among the plurality of images.

7. The image processing system according to claim 5, wherein
   in a case where the calculated reduction ratio is smaller than a predetermined minimum reduction ratio, the image reduction unit reduces the plurality of images by using the minimum reduction ratio.

8. An image processing method executed by an image processing system including
   a computation device that performs predetermined computation processing and a storage device that is accessible by the computation device, the image processing method comprising:

   an image acquisition step of acquiring, by the computation device, a plurality of images captured by a plurality of cameras arranged so that there is an overlapping imaging region where imaging regions at least partially overlap;
   a representative distance calculation step of calculating, by the computation device, a posture change of each camera on a basis of a change in a posture of a host vehicle;

a movement amount computation step of finding, by the computation device, an amount of change in a position of a feature point in the overlapping imaging region of the plurality of images captured by the plurality of cameras; and

a three-dimensional information acquisition step of reducing, by the computation device, the images on a basis of the amount of change in the position of the feature point and using the reduced images to acquire three-dimensional information of the overlapping imaging region.

[FIG. 1]

EP 4 651 083 A1

[FIG. 2]

[FIG. 3]

DETECT LEFT AND RIGHT WHITE LINES FROM IMAGE CAPTURED BY CAMERA A AT TIME T−1 AND CURRENT IMAGE (TIME T), AND CALCULATE COORDINATES OF INTERSECTION — S301

CALCULATE AMOUNT OF CHANGE IN POSITION OF VANISHING POINT OF CAMERA A — S302

CORRECT POSITIONAL RELATIONSHIP BETWEEN CAMERA B AND ROAD SURFACE FROM CHANGE IN POSITION OF VANISHING POINT OF CAMERA A AND ATTACHMENT POSITION OF PROCESSING TARGET CAMERA B — S303

CALCULATE DISTANCE OF EACH PIXEL FROM CAMERA BY USING CORRECTED POSITIONAL RELATIONSHIP BETWEEN CAMERA B AND ROAD SURFACE — S304

CALCULATE MOVEMENT AMOUNT (BLUR) OF EACH PIXEL FROM DISTANCE OF EACH PIXEL AND EXPOSURE TIME — S305

PERFORM DISTORTION CORRECTION — S306

CALCULATE REDUCTION RATIO FROM MAXIMUM VALUE OF MOVEMENT AMOUNT — S307

REDUCE IMAGE OF EACH CAMERA — S308

PERFORM IMAGE MATCHING WITH CAMERA (STEREO MATCHING) — S309

CALCULATE DISTANCE — S310

[FIG. 4]

VANISHING POINT

WHITE LINE
(EDGE LINE OF ROADWAY)

STRAIGHT LINE PASSING
THROUGH VIEWPOINT

WHITE LINE
(CENTER LINE OF ROADWAY)

EP 4 651 083 A1

## INTERNATIONAL SEARCH REPORT

| International application No. |
|---|
| **PCT/JP2023/041790** |

**A.  CLASSIFICATION OF SUBJECT MATTER**

*G06T 7/55*(2017.01)i; *G06T 7/00*(2017.01)i; *G06T 7/254*(2017.01)i; *G06T 7/70*(2017.01)i; *H04N 7/18*(2006.01)i; *H04N 23/60*(2023.01)i; *H04N 23/90*(2023.01)i
FI:   G06T7/55; G06T7/70 Z; G06T7/00 650A; G06T7/254 A; H04N7/18 J; H04N23/90; H04N23/60 500

According to International Patent Classification (IPC) or to both national classification and IPC

**B.  FIELDS SEARCHED**

Minimum documentation searched (classification system followed by classification symbols)

G06T7/55; G06T7/00; G06T7/254; G06T7/70; H04N7/18; H04N23/60; H04N23/90

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 8-43055 A (CANON KABUSHIKI KAISHA) 16 February 1996 (1996-02-16) paragraphs [0006], [0033], [0040]-[0045], fig. 2 | 1-3, 8 |
| A | | 4-7 |
| Y | JP 2017-27220 A (HITACHI AUTOMOTIVE SYSTEMS, LTD.) 02 February 2017 (2017-02-02) paragraphs [0011], [0023], [0028], [0034]-[0037], fig. 8 | 1-3, 8 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **21 December 2023** | **16 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/041790**

| Patent document cited in search report | | | Publication date (day/month/year) | Patent family member(s) | | | Publication date (day/month/year) |
|---|---|---|---|---|---|---|---|
| JP | 8-43055 | A | 16 February 1996 | US | 6118475 | A | |
| | | | | column 4, lines 11-41, column 28, line 19 to column 19, line 20, fig. 18 | | | |
| JP | 2017-27220 | A | 02 February 2017 | US | 2018/0137375 | A1 | |
| | | | | paragraphs [0025], [0037], [0042], [0048]-[0051], fig. 8 | | | |
| | | | | EP | 3328069 | A1 | |
| | | | | CN | 107852465 | A | |

Form PCT/ISA/210 (patent family annex) (January 2015)

15

**EP 4 651 083 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023003960 A
- JP 2008174078 A